# EUROPEAN PATENT APPLICATION

(11) **EP 1 265 421 A1**
(43) Date of publication of application: **11.12.2002**
(21) Application number: 01113741.1
(22) Date of filing: 05.06.2001
(51) Int. Cl.: H04M 1/00

(54) **Mobile terminal comprising means for fixing a headset connector**

(71) Applicant: Sony International (Europe) GmbH, 10785 Berlin (DE)
(72) Inventor: Schweikle, Andreas, Sony Internat. (Europe) GmbH, Heisenbergbogen 1, 85609 Aschheim (DE)
(74) Representative: Körber, Martin, Dipl.-Phys.

(57) **Abstract**

The present invention relates to a mobile terminal (1) for a wireless communication system, comprising a printed circuit board (16), a holding means (17) for holding a headset connector (2), said holding means (17) being adapted to be fixed directly to the printed circuit board (16), elastic contacts (13) for establishing an elastic electrical connection between the headset connector (2) and the printed circuit board (16), and damping means (18) for damping mechanical influence, which acts on the headset connector (2).

## Description

The present invention relates to a mobile terminal for a wireless communication system, like a mobile telephone or a personal digital assistant (PDA) for the Global System for Mobile Telecommunication (GSM) or the Universal Mobile Telephone System (UMTS) comprising a headset connector for establishing an electrical contact between a headset and the mobile terminal.

Headsets are used for hands-free speaking of a user by means of his mobile terminal, e.g. during driving a car. A headset comprises a loudspeaker, which is fastened to the ear of the user and a microphone, and sometimes one or more keys for operating or controlling the headset and/or the mobile terminal.

To establish an electrical connection between the headset and the mobile terminal, the headset comprises a plug which is plugged into a headset connector of the mobile terminal. The headset connector again is electrically connected to a printed circuit board, which comprises the electronic circuitry for operating the mobile terminal inside the mobile and is located inside the mobile terminal.

One solution to connect the headset connector to the printed circuit board of the mobile terminal is to solder the connector to the printed circuit board.

However, this has the disadvantage, that a soldered connection is very stiff. Thus, the electrical contacts for establishing an electrical contact between the headset connector and the printed circuit board as well as the printed circuit board itself are likely to be damaged, since mechanical influence, which occurs e.g. during inserting and unplugging of the headset plug to the headset connector, is directly guided to the printed circuit board by means of the electrical contacts.

To reduce this problem, the document EP 0 920 167 A2 suggests to establish the electrical contact between the headset connector and the printed circuit board by means of spring contacts; the headset connector comprises spring contacts which are connected electrically to contact pads of the printed circuit board. Thereby, the headset connector is fastened by a retaining means inside the housing of the mobile terminal. Thus, the headset connector and the printed circuit board are mechanically de-coupled, so that mechanical influence, which acts on the headset connector, is damped.

However, this has the disadvantage, that both the headset connector and the printed circuit board have to be mounted and fixed with accurate and small mechanical tolerances to the casing inside the mobile terminal to connect the spring contacts and the contact pads safely and securely. In the worst case, the mechanical tolerances, with which the headset connector is mounted to the casing, and the mechanical tolerances, with which the printed circuit board is mounted to the casing, add up to a large tolerance, with which the headset connector and the printed circuit board are mounted in relation to each other.

It is therefore the object of the present invention to provide a mobile terminal for a wireless communication system, which comprises a headset connector, which is both mechanically de-coupled from the printed circuit board in order to reduce the result of mechanical influence and which allows to reduce the mechanical tolerances during assembling the mobile terminal.

The above object is achieved by a mobile terminal for a wireless communication system according to claim 1.

The mobile terminal according to the present invention comprises inside the casing a printed circuit board for providing the electronic circuitry, e.g. controlling means, storing means, signal processing means etc., which are necessary for the operation of the mobile terminal. The mobile terminal further comprises a holding means for holding the headset connector, whereby the holding means is adapted to be fixed directly to the printed circuit board, and elastic contacts for establishing an elastc electrical connection between the headset connector and the printed circuit board. To damp the mechanic influence, which acts on the headset connector, e.g. during inserting and unplugging a plug of a headset, the mobile terminal comprises also a damping means.

The present invention has the advantage that the respective mechanical tolerances, with which the several parts (i.e. headset connector and printed circuit board) are mounted inside the casing, are not added up as in the prior art. Only the mechanical tolerance, with which the headset connector is fixed by the holding means directly to the printed circuit board in relation to the printed circuit board, takes effect. The mechanical tolerance in relation to the casing, with which the printed circuit board is mounted to the casing, takes no effect in view to the mechanical tolerances of the positioning of the headset connector in relation to the printed circuit board.

Advantageously, the holding means is fixed on the printed circuit board by a fixing means.

The holding means can e.g. be a part of a display holder and/or a loudspeaker holder, which is fixed to the printed circuit board.

The headset connector is guided into the correct position in the holding means by guiding means. This guiding means can be e.g. guiding ribs or guiding pins, which are e.g. part of the headset connector and/or part of the holding means.

Advantageously, the headset connector is clipped into the holding means by a clipping means. Thus, the headset connector cannot fall out of the holding means during assembling. The clipping means can also be a part of the headset connector and/or part of the holding means.

Further advantageously, the elastic contacts are spring contacts, whereby the springs are e.g. leaf springs.

The elastic contacts can also be constructed to act as the damping means. Thus, the contact function and the damping function is combined in one part, namely the elastic contacts.

To fix the holding means on the printed circuit board, the fixing means comprises at least one screw. This screw can e.g. fix the holding means or the display, loudspeaker holder, at which the holding means is a part from, on the printed circuit board.

In the following description a preferred embodiment of the present invention is explained in more detail in relation to the enclosed drawings, in which
Fig. 1 shows a schematic overview of a mobile terminal,
Fig. 2 shows a spatial view of a headset connector,
Fig. 3 shows a front view of a headset connector held on a printed circuit board by the holding means, and
Fig. 4 shows an example of the realisation of the present invention, whereby the holding means is a part of a display/loudspeaker holder.

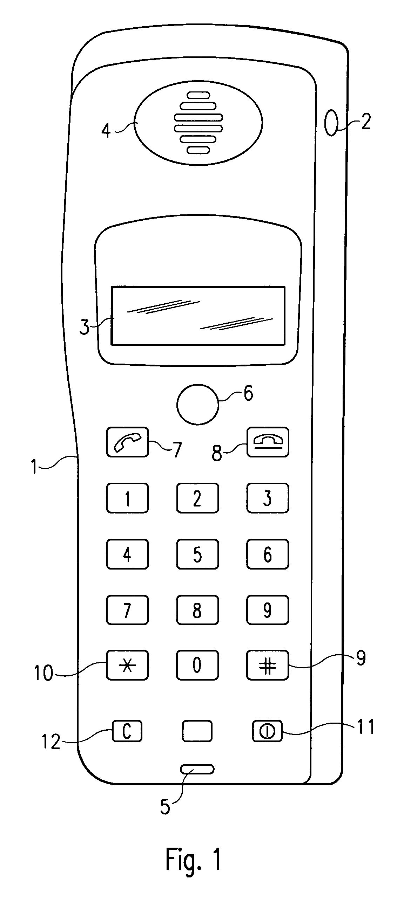

Fig. 1 shows a schematic top view of a mobile telephone 1 (mobile terminal 1) for a wireless communication system as e.g. the GSM or the UMTS system. Although the following description solely relates to a mobile telephone, the present invention could also be realised in any portable devices with headset connectors or any other electrical contacts, like portable palmtop computers with a headphone/microphone or headset connector, and the like.

The mobile telephone 1 comprises a headset connector 2, which is located sidewards of the mobile telephone 1. From the outside, only the opening for receiving the plug of the headset is visible.

The mobile telephone 1 further comprises a display means 3, on which information like characters, menu items, text information, status information or the like can be displayed. The mobile telephone 1 also comprises a loudspeaker 4 on the upper front part and a microphone 5 on the lower front part of the casing. Further, an enter or menu key 6 as enter means for selecting a respective menu item or function is provided.

The mobile telephone 1 further comprises the usual ten alphanumeric keys (numbers 0 to 9), a communication start key 7, a communication end key 8, a pound key 9, a star key 10, a power-on/off key 11 and a clear key 12. The mobile telephone 1 can also comprise further operating means like a scroll means (not shown), e.g. a rotable key, and the like.

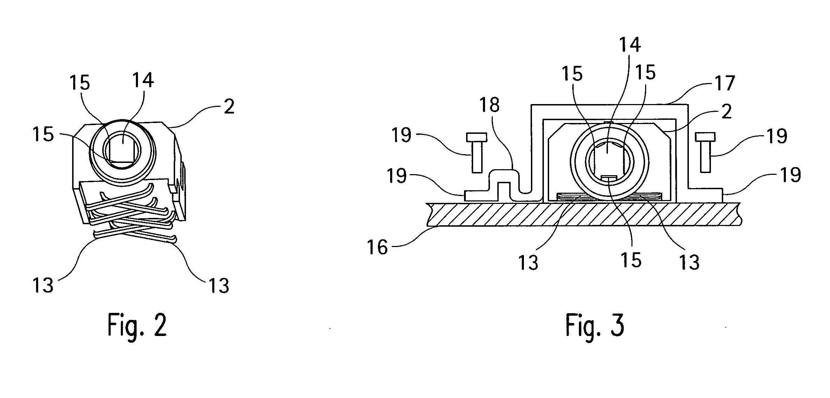

As seen in a spatial view of the headset connector 2 in Fig. 2, the headset connector 2 comprises elastic contacts 13 for establishing electrical connections to a printed circuit board which correspond and are adapted to make electrical contact to contact pads of the printed circuit board. It is also possible to provide the headset connector 2 with contact pads, which correspond to respective elastic contacts of the printed circuit board. The elastic contacts allow to establish an electrical connection with simultaneous mechanical de-coupling between the headset connector and a printed circuit board.

The elastic function of the elastic contacts can e.g. realised by leaf spring contacts, as shown in Fig. 2, or coil spring contacts.

The headset connector 2 further comprises an opening 14 for receiving a plug of a headset and electrical contacts inside the opening 14 for establishing electrical contact between the plug of the headset and the headset connector 2.

Fig. 3 shows the front view of the headset connector 2 as shown in Fig. 2, which is directly held by a holding means 17 on a printed circuit board 16. Thereby, the elastic contacts 13 are pressed on suitable contact pads (not shown) of the printed circuit board 16.

In the embodiment of the present invention as shown in Fig. 3, the holding means 17 comprises a damping means 18 for damping the mechanical influence, which acts on the headset connector 2, e.g. during inserting and unplugging a plug of a headset. Thereby, the damping means 18 is made of an elastic material, e.g. plastic, to damp the mechanical influence between the headset connector and the holding means 17 and the printed circuit board 16, respectively.

However, the damping means 18 can be performed in a variety of other ways. E.g. the damping means 18 can also be part of the headset connector 2 or the printed circuit board 16, whereby the damping means 18 e.g. can be a leaf spring made of an elastic material like metal or plastic.

The damping function can also be provided by the elastic contacts 13. In this case, the headset connector must have a little mechanical slack inside the holding means 17, that means that a minimal mechanical movement of the headset connector inside the holding means 17 must be possible, and the elastic contacts 13 have to be adapted to act as damping means, they have e.g. to be strong enough to damp mechanical influence.

The holding means 17 is fixed to the printed circuit board 16 by fixing means 19. The fixing means 19 consists in the shown embodiment of a flange, which is a part of the holding means 17 and fixed to the printed circuit board 16 by means of one or more screws.

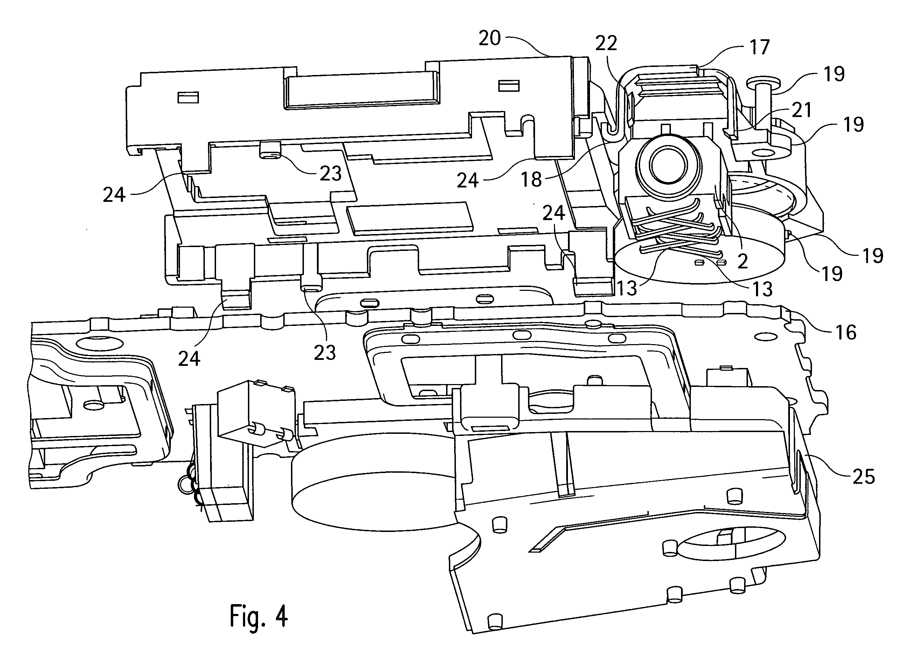

In an other embodiment of the present invention as shown in Fig. 4, the holding means 17 is a part of a display- and/or loudspeaker-holder 20, which is directly assembled to the printed circuit board 16.

Thereby, the damping means 18 is arranged between the holding means 17 and the display holder 20 (and/or loudspeaker holder 20) in order to mechanical de-coupling the headset connector 2 and the display holder 20, whereby the damping means 18 is advantageously moulded as a part of the display holder 20.

The headset connector 2 is positioned into the holding means 17 and fixed in all three directions by guiding means 22 (e.g. guiding ribs 22) and a clipping means 21 (snap clip). Thus, the headset connector 2 can not fall out of the holding means 17 during assembly of the unit (display holder, loudspeaker holder, headset connector) to the printed circuit board 16.

Additionally to the fixing means 19 , the display holder 20 is positioned into a correct position by positioning pins 23 and fixed by four snap clips 24. After the two screws of the fixing means 19 are inserted, the system is absolutely fix mounted. The two screws can e.g. go through the printed circuit board into screw domes of an antenna on the other side of the printed circuit board. Thus, the headset connector 2 is fix assembled to a feature of a display holder 20, which is directly assembled to the printed circuit board 16.

Thus, according to the present invention, the headset connector 2 is fixed to and positioned on the printed circuit board 16 without the use of main cabinet parts of the mobile telephone. This improves the positioning of many parts of the mobile telephone during assembling by reducing the tolerance chain. Furthermore, the electrical contact situation is improved by fixing means 19, which are positioned close to the headset connector 2.

A further advantage of the present invention is, that the headset connector and the display holder are mechanically de-coupled by a small elastic spring element in order to avoid any damage of the display holder 20 during stress application to the headset connector 2.

Also further, caused by little movement between the elastic contacts and the contact pads e.g. during inserting and unplugging the plug of the headset, the electrical contact between the headset connector and the printed circuit board is always warranted, since the friction between the contacts, which occurs during this movement, keeps the contacts clear.

## Claims

1. Mobile terminal (1) for a wireless communication system, comprising
a printed circuit board (16),
a holding means (17) for holding a headset connector (2), said holding means (17) being adapted to be fixed directly to the printed circuit board (16),
elastic contacts (13) for establishing an elastic electrical connection between the headset connector (2) and the printed circuit board (16), and
damping means (18) for damping mechanical influence acting on the headset connector (2).

2. Mobile terminal (1) according to claim 1,
**characterized by**
fixing means (19) for fixing the holding means (17) to the printed circuit board (16).

3. Mobile terminal (1) according to claim 1 or 2,
**characterized in**
**that** the holding means (17) is part of a display holder (20).

4. Mobile terminal (1) according to claim 1, 2 or 3,
**characterized in**
**that** the holding means (18) is part of a loudspeaker holder.

5. Mobile terminal (1) according to one of the claims 1 to 4,
**characterized by**
guiding means (22) for guiding the headset connector (2) into the correct position in the holding means (17).

6. Mobile terminal (1) according to one of the claims 1 to 5,
**characterized by**
clipping means (21) for clipping the headset connector (2) into the holding means (17).

7. Mobile terminal (1) according to one of the claims 1 to 6,
**characterized in**
**that** the elastic contacts (13) are spring contacts.

8. Mobile terminal (1) according to one of the claims 1 to 7,
**characterized in**
**that** the elastic contacts (13) are constructed to act as damping means.

9. Mobile terminal (1) according to one of the claims 1 to 8,
**characterized in**
**that** the fixing means (19) comprises at least one screw to fix the holding means on the printed circuit board (16).
